(19)

Europäisches
Patentamt
European
Patent Office
Office européen
des brevets

(11)     **EP 2 106 980 B1**

(12)                    **EUROPEAN PATENT SPECIFICATION**

(45) Date of publication and mention
of the grant of the patent:
**01.01.2020   Bulletin 2020/01**

(51) Int Cl.:
***B60T 8/17*** *(2006.01)*          ***B60T 8/172*** *(2006.01)*

(21) Application number: **09004245.8**

(22) Date of filing: **25.03.2009**

(54) **Deriving method and deriving apparatus of lateral acceleration, and bar handle vehicle brake controller**

Verfahren und Vorrichtung zur Bestimmung der Querbeschleunigung und Bremssteuerung für ein Fahrzeug mit Lenker

Procédé et appareil pour déterminer l'accélération latérale, et contrôleur de frein de véhicule à guidon

(84) Designated Contracting States:
**DE ES GB IT**

(30) Priority:  **31.03.2008   JP 2008090513**
**31.03.2008   JP 2008089359**

(43) Date of publication of application:
**07.10.2009   Bulletin 2009/41**

(73) Proprietor: **NISSIN KOGYO CO., LTD.**
**Nagano, 389-0514 (JP)**

(72) Inventor: **Hasegawa, Tetsuya**
**Nagano 389-0514 (JP)**

(74) Representative: **Hoffmann Eitle**
**Patent- und Rechtsanwälte PartmbB**
**Arabellastraße 30**
**81925 München (DE)**

(56) References cited:
**EP-A- 0 603 612        WO-A-2006/077211**
**DE-A1- 3 839 520        DE-A1- 4 000 212**
**DE-A1- 10 235 378        DE-A1-102004 021 590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

This invention relates to a deriving method and a deriving apparatus which derives lateral acceleration applied to a bar handle vehicle during turning. Further, this invention also relates to a bar handle vehicle brake controller.

Description of Related Art

Hitherto, there are methods of determining the turning state of a bar handle vehicle such as a motorcycle (for example, see Japanese Patent Unexamined Publications JP-A-2004-051091 and JP-A-07-002077).

In the JP-A-2004-051091, a lateral acceleration applied in a side-to-side direction (axial direction in wheel) of a motorcycle is detected by an acceleration sensor, whether or not the state is an off-balance state of the vehicle is determined in response to the output value of the acceleration sensor, and braking torque is controlled 20 based on the determination result.

In the JP-A-07-002077, vertical acceleration applied in an up-and-down direction of a motorcycle and a lateral acceleration applied in a side-to-side direction of the motorcycle are detected by two acceleration sensors, the turning state of the 25 vehicle (inclined attitude angle) is determined based on the output values of the acceleration sensors, and braking torque is controlled based on the determination result. Specifically, the inclined attitude angle is calculated based on the following expression:

$$\phi = \arctan (A1/A2)$$

(Φ: Inclined attitude angle, A1: Vertical acceleration, A2: Lateral acceleration)

The lateral acceleration sensors disclosed in the JP-A-2004-051091 and the JP-A-07-002077 directly detect an acceleration which directs lateral direction relative to the vehicle (i.e., parallel to a rotational axis of a wheel).

However, when the vehicle stably turns while the vehicle is inclined, the component of the gravity which directs lateral direction relative to the vehicle balances with the component of centrifugal force which directs lateral direction relative to the vehicle. Since the lateral acceleration sensors disclosed in the JP-A-2004-051091 and the JP-A-07-002077 detects resultant force of them, if the component of the gravity and the component of the centrifugal force cancel each other, the sensor detects "0" as the lateral acceleration which directs lateral direction relative to the vehicle.

That is, the sensors cannot detect the lateral acceleration when the vehicle stably turns. Because the lateral acceleration is not obtained, the inclination angle of the vehicle is not obtained, neither. Thus, the improvement of the control of braking torque cannot be expected.

Further, in thus configured structure, two acceleration sensors are required. Therefore, the cost becomes high.

DE 10 2004 02 1590 deals with identifying an angle of inclination of two wheeled vehicle according to the prior art.

WO 2006/077 211 discloses a method and system according to the preamble of the appended independent claims, however this PCT publication relates to regulating the braking force of a motorbike by using four sensors according to the prior art.

SUMMARY OF THE INVENTION

It is therefore an object of the invention to provide an antilock-brake control method and an antilock brake controller, capable of deriving the lateral acceleration in a state in which a bar handle vehicle turns stably and a bar handle vehicle brake controller.

The object is achieved by the subject-matter of the independent claims. Advantageous embodiments are defined in the dependent claims. Further examples are provided for facilitating the understanding of the invention.

According to an example, there is provided an anti-lock brake control method for a bar handle vehicle, the method including:

detecting an acceleration of the vehicle by an acceleration sensor of which the detection axis does not direct to a back-and-forth direction and left-and-right direction of the vehicle; and
deriving a lateral acceleration, which is horizontal to a ground, based on the detected acceleration.

Note that the lateral acceleration sensors disclosed in the JP-A-2004-051091 20 and the JP-A-07-002077 detects the acceleration which directs lateral direction relative to the vehicle. However, the acceleration sensor of the present invention detects the acceleration other than the lateral acceleration lateral relative to the vehicle, and based on thus detected acceleration, a lateral acceleration which is horizontal to the ground is derived.

When the vehicle stably turns, a horizontal component of the centrifugal force which directs radially outward of the turning motion is applied to the vehicle. Because this horizontal component of the centrifugal force is perpendicular to the gravity acceleration, this horizontal component of the centrifugal force does not cancel with the gravity acceleration. Therefore, even if the vehicle stably turns, the thus derived horizontal component does not become "0", contrary to the above described lateral sensors of the JP-A-2004-051091 and the JP-A-07-002077.

According to the invention, the component in the detection axis direction, of the acceleration applied to the bar handle vehicle is detected by the acceleration sensor placed in the vehicle body with the detection axis directs in a direction not matching the back-and-forth direction or the side-to-side direction of the bar handle vehicle.

When the bar handle vehicle turns stably, only the resultant force of the gravity and the centrifugal force is applied to the bar handle vehicle along the up-and-down direction of the vehicle and the force applied in the side-to-side direction of the vehicle is canceled to zero.

Thus, in the invention, using the acceleration sensor with the detection axis directs in a direction not matching the side-to-side direction of the vehicle, the component in the detection axis direction, of the acceleration applied in the up-and-down direction of the stably turning bar handle vehicle can be reliably detected. The acceleration is thus reliably detected, whereby the lateral acceleration can be derived using the Pythagorean theorem from the acceleration and the already known gravity acceleration, for example.

According to the invention, there is provided an anti-lock brake controller including:

an acceleration sensor which detects acceleration of the vehicle and of which detection axis does not direct to a back-and-forth and left-and-right directions of the vehicle; such as said detection axis is shifted by a first angle relative to an up-and-down axis;

a lateral acceleration deriving unit which derives a lateral acceleration, which is horizontal to a ground, based on the detected acceleration;

a turning state estimation unit which estimates a turning state of the bar handle vehicle based on the derived lateral acceleration; and

a braking force control unit which controls braking force applied to the bar handle vehicle based on the estimated turning state.

According to the invention, the acceleration sensor of which detection axis directs in the direction not matching the back-and-forth direction or the side-to-side direction of the vehicle is used, the acceleration applied to the vehicle can be reliably detected in a state that the bar handle vehicle stably turns, and the lateral acceleration can be reliably derived based on the acceleration.

BRIEF DESCRIPTION OF THE DRAWINGS

FIG. 1 is a front view showing a motorcycle installing a motorcycle brake controller according to an embodiment not supporting the invention;

FIG. 2 is a brake fluid pressure circuit diagram showing the motorcycle brake controller;

FIG. 3 is a block diagram showing the configuration of a control section;

FIG. 4 is a flowchart showing the operation of the control section;

FIG. 5 is a schematic representation showing acceleration applied to the motorcycle at the stable turning time;

FIG. 6 is a schematic representation showing a mode in which the detection axis of an acceleration sensor is inclined from the up-and-down axis of the motorcycle;

FIG. 7 is a block diagram showing the configuration of a control unit according to a second embodiment of the invention;

FIG. 8 is a flowchart showing the operation of a motorcycle brake controller according to the second embodiment of the invention;

FIG. 9 is a block diagram showing the configuration of a control unit according to a third embodiment of the invention; and

FIG. 10 is a flowchart showing the operation of a brake controller according to the third embodiment of the invention.

DETAILED DESCRIPTION OF EXEMPLARY EMBODIMENTS OF THE PRESENT INVENTION

An embodiment of the invention will be explained in detail with reference to the accompanying drawings. In the following description, a motorcycle is illustrated as an example of a bar handle vehicle. The bar handle vehicle in the invention includes all vehicles each having a bar handle steering and turned by inclining the vehicle body. For example, it contains a motor tricycle with one front wheel and two rear wheels, etc, in addition to a normal motorcycle.

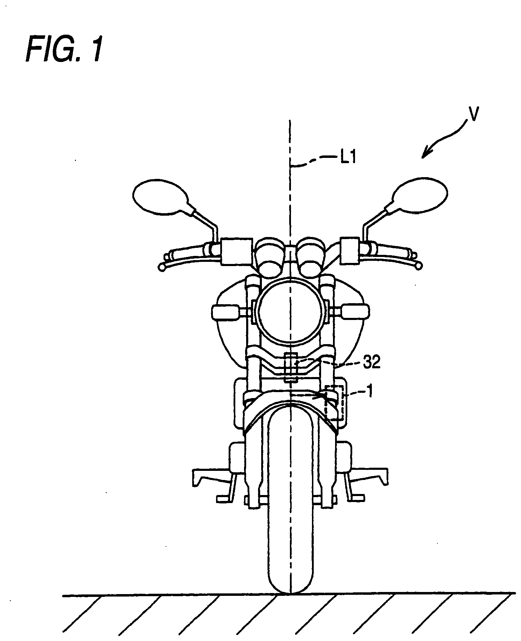

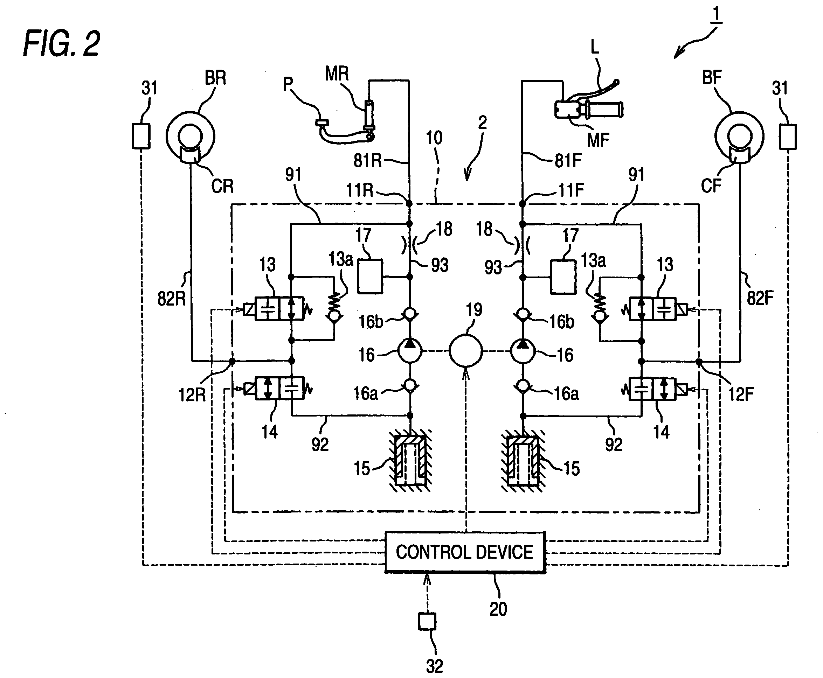

FIG. 1 is a front view showing a motorcycle installing a motorcycle brake controller according to an embodiment not supporting the invention, and FIG. 2 is a brake fluid pressure circuit diagram showing the motorcycle brake controller.

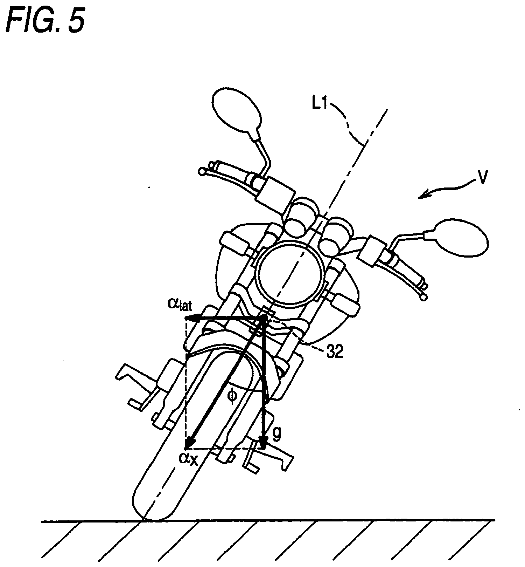

As shown in FIG. 1, a motorcycle brake controller 1 (hereinafter, simply, brake controller 1) includes an acceleration sensor 32 provided on a vehicle body in a state that a detection axis directs along an up-and-down axis LI of a motorcycle V; and a hydraulic unit 2 for performing brake control based on the acceleration detected by 20 the acceleration sensor 32. The up-and-down direction mentioned here is used to mean the up-and-down direction when the vehicle is upright. When the motorcycle V is turning and is inclined to the ground as in FIG. 5, the direction of a vector $\alpha_x$ in the figure is the down direction.

The motorcycle V having the brake controller 1 is provided with a front brake BF in the front wheel and a rear brake BR in the rear wheel. The front brake BF is provided with a front caliper CF for generating braking force with a brake disk sandwiched between brake pads; and likewise, the rear brake BR is also provided with a rear caliper CR. The motorcycle V is also provided with a first master cylinder MF which outputs hydraulic pressure in response to operation of a brake lever L operated with the right hand of a driver and a second master cylinder MR which outputs hydraulic pressure in response to operation of a brake pedal P operated with the right foot of the driver.

The hydraulic unit 2 includes a hydraulic circuit 10 formed with a hydraulic passage on a substrate (not shown) and having electromagnetic valves appropriately provided in the hydraulic passage and a control section 20 for controlling the electromagnetic valves. The first master cylinder MF, the second master cylinder MR, the front caliper CF, and the rear caliper CR are connected to the hydraulic circuit 10.

The first master cylinder MF is connected to an inlet port 11F of the hydraulic circuit 10 through piping 81F, and the front caliper CF is connected to an outlet port 12F of the hydraulic circuit 10 through piping 82F. Likewise, the second master cylinder MR is connected to an inlet port 11R of the hydraulic circuit 10 through 20 piping 81R, and the rear caliper CR is connected to an outlet port 12R of the hydraulic circuit 10 through piping 82R.

The inlet port 11F and the outlet port 12F are connected by a hydraulic passage 91 and an inlet valve 13 of a normally open electromagnetic valve is provided 25 in the hydraulic passage 91. The inlet valve 13 is provided with a check valve 13a in parallel.

A reservoir 15 for allowing a brake fluid to flow back and storing the brake fluid when the brake fluid pressure of the front brake BF is reduced is connected to the outlet port 12F through a hydraulic passage 92, and an outlet valve 14 of a normally closed electromagnetic valve is provided in the hydraulic passage 92.

Therefore, at the normal time, the brake fluid pressure output from the first master cylinder MF passes through the hydraulic passage 91 and is supplied to the front caliper CF. On the other hand, to reduce the pressure of the front caliper CF to perform antilock brake control, etc., a signal for closing the inlet valve 13 is sent to the 10 inlet valve 13 and a signal for opening the outlet valve 14 is sent to the outlet valve 14, whereby the brake fluid in the front caliper CF flows back through the outlet valve 14 to the reservoir 15 and the fluid pressure in the front caliper CF lowers:

The reservoir 15 is also connected to the inlet port 11 F by a hydraulic passage 93. Provided in the hydraulic passage 93 are an inlet valve 16a, a pump 16 for sucking brake fluid from the reservoir 15, a discharge valve 16b, a dumper 17 for absorbing fluctuation of the brake fluid pressure, and an orifice 18 in order from the reservoir 15 to the first master cylinder MF. The pump 16 is connected to a motor 19 so as to be driven by the motor 19. According to the configuration, excessive brake 20 fluid in the reservoir 15 is sucked by the pump 16 and is allowed to flow back into the first master cylinder MF.

The circuit configuration of the hydraulic circuit 10 on the front wheel side thereof has been described. The configuration on the rear wheel side is also similar 25 and therefore will not be discussed again in detail.

The control section 20 controls the inlet valve 13, the outlet valve 14, and the motor 19 to control the hydraulic pressures of the front caliper CF and the rear caliper CR. Each of the front wheel and the rear wheel is provided with a wheel speed sensor 31, and the rotation speed of the wheel detected by the wheel speed sensor 31 is input to the control section 20. The acceleration detected by the acceleration sensor 32 is also input to the control section 20.

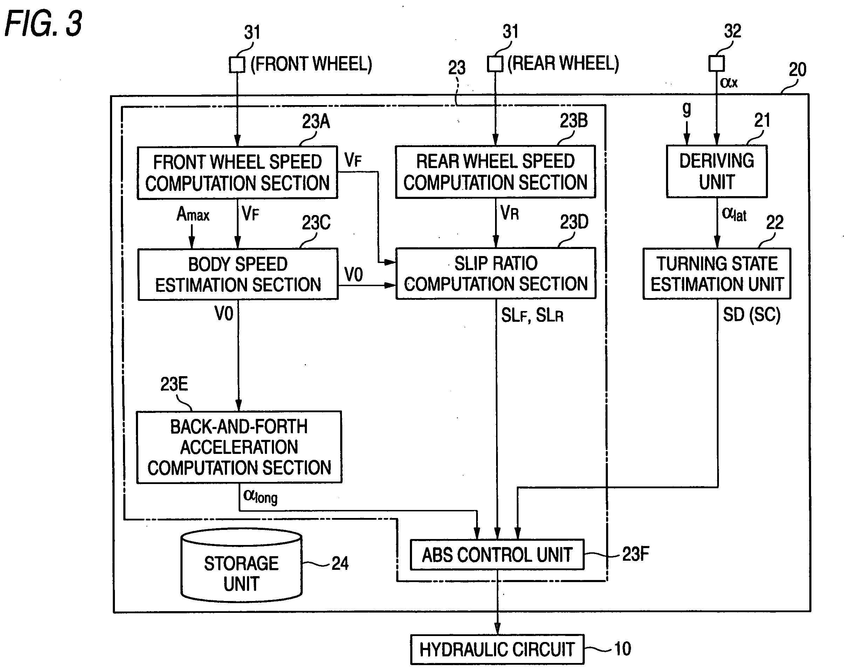

FIG. 3 is a block diagram showing the configuration of the control section 20. The control section 20 includes a CPU, ROM, RAM, etc., (not shown) and controls the hydraulic circuit 10 in accordance with a program stored in the memory.

Specifically, the control section 20 includes a deriving unit 21, a turning state estimation unit 22, a braking force control unit 23, and storage 24, as shown in FIG. 3.

The deriving unit 21 has a function of deriving lateral acceleration $\alpha_{lat}$ in the horizontal direction applied to the turning motorcycle V based on acceleration $\alpha_x$ detected by the acceleration sensor 32. Specifically, when acquiring the

acceleration $\alpha_x$ from the acceleration sensor 32, the deriving unit 21 reads gravity acceleration "g" stored in the storage 24 in advance and uses the values $\alpha_x$ and "g" to calculate lateral acceleration $\alpha_{lat}$ according to the Pythagorean theorem. That is, the deriving unit 21 calculates the lateral acceleration $\alpha_{lat}$ according to the following expression (1):

$$\alpha_{lat} = \sqrt{(\alpha_X{}^2 - g^2)} \quad (1)$$

The deriving unit 21 outputs the calculated lateral acceleration $\alpha_{lat}$ to the turning state estimation unit 22.

The turning state estimation unit 22 has a function of estimating the turning state of the motorcycle V based on the lateral acceleration $\alpha_{lat}$ upon reception of the lateral acceleration $\alpha_{lat}$ from the deriving unit 21. Specifically, the turning state estimation unit 22 determines whether or not the lateral acceleration $\alpha_{lat}$ is equal to or greater than a predetermined value. If the turning state estimation unit 22 determines that the lateral acceleration $\alpha_{lat}$ is less than the predetermined value, the turning state estimation unit 22 outputs a straight-ahead signal SD indicating a straight-ahead state to ABS control unit 23F described later. If the turning state estimation unit 22 determines that the lateral acceleration $\alpha_{lat}$ is equal to or greater than the predetermined value, the turning state estimation unit 22 outputs a turn signal SC indicating a turning state (slip turning state) in which a wheel slip occurs more easily than the straight-ahead time to the ABS control unit 23F.

The braking force control unit 23 is made up of a front wheel speed computation section 23A, a rear wheel speed computation section 23B, a body speed estimation section 23C, a slip ratio computation section 23D, a back-and-forth acceleration computation section 23E, and the above-mentioned ABS control unit 23F.

The front wheel speed computation section 23A computes the speed of the rolling outer periphery of the front wheel (front wheel speed $V_F$) considering the outer diameter of the front wheel based on the input rotation speed of the front wheel, and outputs the front wheel speed $V_F$ to the body speed estimation section 23 C and the slip ratio computation section 23D. The rear wheel speed computation section 23B also computes rear wheel speed $V_R$ like the front wheel and outputs the found rear wheel speed $V_R$ to the slip ratio computation section 23D.

The body speed estimation section 23 C estimates vehicle body speed VO based on the front wheel speed $V_F$. In a normal state, the body speed estimation section 23C sets the vehicle speed VO as the front wheel speed $V_F$. However, when the deceleration of the front wheel speed $V_F$ exceeds a predetermined deceleration upper limit Amax, the body speed estimation section 23C sets the vehicle speed VO so that a deceleration A of the vehicle body speed VO becomes the deceleration upper limit 10 value $A_{max}$. The vehicle body speed VO is output to the slip ratio computation section 23D and the back-and-forth acceleration computation section 23E.

The deceleration upper limit value $A_{max}$ may be a constant value or may be changed as required in response to the situation of the road surface estimated from the front wheel speed $V_F$ and the rear wheel speed $V_R$, for example, the temperature, inclination of the road surface, etc.

The slip ratio computation section 23 D calculates the slip ratios of the front wheel and the rear wheel from the vehicle body speed V0, the front wheel speed $V_F$, and the rear wheel speed $V_R$. An example of a slip ratio calculation method is as follows: The slip ratio of the rear wheel can be found as

$$SL_R = (V0 - V_R) \times 100/V0$$

and the slip ratio of the front wheel
can be found as $SL_F = (VO - V_F) \times 100/V0$

The slip ratio computation section 23 D outputs the calculated slip ratios SLR and $SL_F$ to the ABS control unit 23F.

The back-and-forth acceleration computation section 23 E calculates back-and-forth acceleration $\alpha_{long}$ based on the vehicle body speed V0. Specifically, the back-and-forth acceleration $\alpha_{long}$ can be found by differentiating the vehicle body speed VO input from the body speed estimation section 23C. The back-and-forth acceleration computation section 23E outputs the calculated back-and-forth acceleration $\alpha_{long}$ to the ABS control unit 23F.

The ABS control unit 23F executes ABS control based on the slip ratio SLR, SLF computed by the slip ratio computation section 23D and the back-and-forth acceleration $\alpha_{long}$ calculated by the back-and-forth acceleration computation section 23E. Specifically, when the slip ratio SLR, SLp becomes a predetermined threshold value or more and the back-and-forth acceleration $\alpha_{long}$ is equal to or less than 0, the ABS control unit 23F executes pressure reduction control of the front caliper CF or the rear caliper CR to prevent lock of the wheel. That is, to start the pressure reduction control, the ABS control unit 23F closes the inlet valve 13 and opens the outlet valve 14, thereby discharging the brake fluid in the caliper CF, CR and reducing the pressure of the caliper CF, CR.

Next, when the back-and-forth acceleration $\alpha_{long}$ becomes larger than 0, the ABS control unit 23F closes both of the inlet valve 13 and the outlet valve 14 to hold the brake fluid pressure in the caliper CF, CR.

Next, when the slip ratio SLR, $SL_F$ become less than the predetermined threshold value and the back-and-forth acceleration $\alpha_{long}$ becomes equal to or less than 0, the ABS control unit 23F opens the inlet valve 13 and closes the outlet valve 14, thereby increasing the pressure of the caliper CF, CR.

The ABS control unit 23F also controls the braking force of the motorcycle V based on the turning state estimated by the turning state estimation unit 22. More particularly, the ABS control unit 23F changes the threshold value for starting antilock control (pressure reduction control) based on the turning state in a direction in which the antilock control is easily started. Specifically, upon reception of the 10 straight-ahead signal SD output from the turning state estimation unit 22, the ABS control unit 23F reads an initial value $\alpha1$ previously stored in the storage 24 and sets the initial value $\alpha1$ as the threshold value. Upon reception of the turn signal SC output from the turning state estimation unit 22, the ABS control unit 23F reads an update value $\alpha2$ set to a lower value than the initial value al from the storage 24 and 15 sets the update value $\alpha2$ as the threshold value.

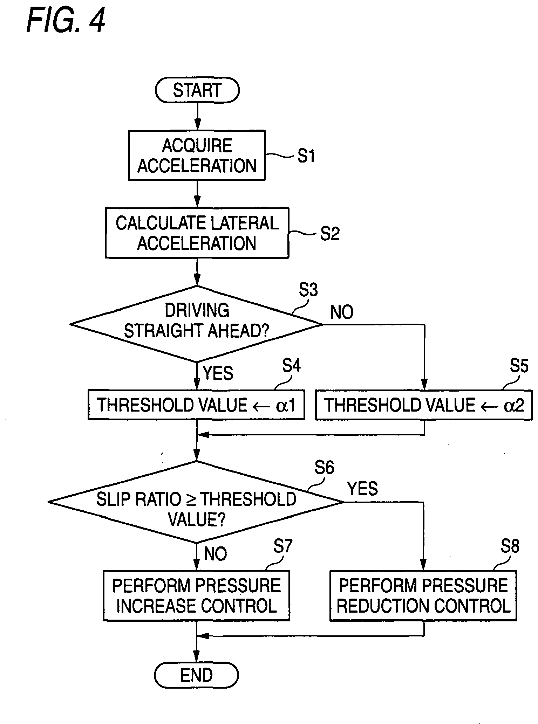

Next, the operation of the control section 20 according to the embodiment will be discussed. FIG. 4 is a flowchart showing the operation of the control section and FIG. 5 is a schematic representation showing acceleration applied to the motorcycle at 20 the stable turning time.

The control section 20 starts execution of slip control shown in FIG. 4 (START). In the slip control, first the control section 20 acquires acceleration $\alpha_x$ from the acceleration sensor 32 (S 1 : Detection step). At this time, if the motorcycle V stably turns in an inclined state, the acceleration sensor 32 detects the acceleration $\alpha_x$ larger than the gravity acceleration g, as shown in FIG. 5.

After step SI, the control section 20 calculates lateral acceleration $\alpha_{lat}$ according to the acquired acceleration $\alpha_x$ , the gravity acceleration g acquired from the storage 24, and expression (1) described above (S2: Deriving step). That is, the gravity acceleration g, the acceleration $\alpha_x$, and the lateral acceleration $\alpha_{lat}$ form the sides of a right triangle shown in FIG. 5 and therefore the lateral acceleration $\alpha_{lat}$ is calculated according to the Pythagorean theorem.

After step S2, the control section 20 determines whether or not the motorcycle V is driving straight ahead based on the lateral acceleration $\alpha_{lat}$ (S3). If the control section 20 determines that the motorcycle V is driving straight ahead (YES at S3), the control section 20 selects the initial value $\alpha1$ as the threshold value of the slip control (S4). If the control section 20 does not determine that the motorcycle V is driving straight ahead (NO at S3), the control section 20 selects the update value $\alpha2$ lower than the initial value a1 as the threshold value (S5).

After step S4 or S5, the control section 20 makes a comparison between the threshold value set at step S4 or S5 and the slip ratio SLR, SLF and determines whether or not the slip ratio SLR, SLF is equal to or greater than the threshold value (S6). If the control section 20 determines that the slip ratio SLR, SLF is less than the threshold value (NO at S6), the control section 20 executes pressure increase control (S7). If the control section 20 determines that the slip ratio SLR, SLF is equal to or greater than the threshold value (YES at S6), the control section 20 executes pressure reduction control (S8). After step S7 or S8, the control section 20 completes the processing according to the flow.

In the control section 20 executing the processing as described above, if the motorcycle V stably turns in an inclined state as shown in FIG. 5, the process proceeds from step SI to S2 to NO at S3 to S5, whereby the update value $\alpha_2$ lower than the initial value $\alpha_1$ is referenced at step S6. Accordingly, the pressure reduction control is easily entered at the turning time of the motorcycle V.

The embodiment can provide the following advantages.

The acceleration sensor 32 with the detection axis directs in the direction not matching the back-and-forth direction or the side-to-side direction of the motorcycle V is used, the acceleration $\alpha_x$ applied to the motorcycle V can be reliably detected in a state where the motorcycle V stably turns, and the lateral acceleration $\alpha_{lat}$ can be reliably derived based on the acceleration $\alpha_x$.

Since the detection axis of the acceleration sensor 32 directs in the up-and-down direction of the motorcycle V, the maximum value of the acceleration applied to the stably turning motorcycle V (the acceleration corresponding to the resultant force of the gravity acceleration and the lateral acceleration) can be detected 20 and it becomes hard to receive the effect of the acceleration in the back-and-forth direction of the vehicle, so that the lateral acceleration can be derived more precisely.

In the turning state where a wheel slip occurs more easily than the straight-ahead state, the threshold value is set to the update value $\alpha2$ lower than the 25 initial value $\alpha1$, whereby starting of the antilock control (pressure reduction control) is promoted, so that occurrence of a slip in the turning state can be suppressed.

The invention is not limited to the specific embodiment described above and can be used in various forms as illustrated below.

In the embodiment described above, the lateral acceleration $\alpha_{lat}$ is calculated according to the Pythagorean theorem, but the invention is not limited to the mode. For example, a map indicating the relationship between the acceleration $\alpha_x$ and the lateral acceleration $\alpha_{lat}$ may be previously stored in the storage 24 and the lateral acceleration $\alpha_{lat}$ may be derived based on the map and the acceleration $\alpha_x$.

In the embodiment described above, the turning state estimation unit 22 estimates (determines) whether the vehicle is in the straight-ahead state or the turning state, but the invention is not limited to this embodiment. For example, the turning state estimation unit 22 may estimate (determine) based on the lateral acceleration whether the vehicle body is in a usual turning state in which the vehicle body is inclined at a slight angle from the vertical direction and turns or a slip turning state in which a slip easily occurs as the vehicle body is inclined more largely than the usual turning state. In this case, other parameters such as a road surface friction coefficient, etc., may be referenced for estimating the turning state. Specifically, for example, if the lateral acceleration is a predetermined value or more and the road surface friction coefficient is a predetermined value or less, it may be estimated that the vehicle is in the slip turning state.

In the embodiment described above, the invention is applied to the brake controller 1. However, for example, the acceleration sensor 32, the deriving unit 21, and the storage 24 shown in FIG. 3 may be a deriving device separated from the brake controller.

In the embodiment described above, the slip ratio SLR, SLF is calculated as a plus value and thus the threshold value for starting the ABS control is changed from the initial value al to the update value $\alpha2$ lower than the initial value $\alpha1$, but the invention is not limited to the mode. The threshold value may be changed to a higher value than the initial value in a direction in which the ABS control is easily started. For example, if the slip ratio SLR is found from the expression

$$SLR = (V_R - V0) \ X \ 100/V0$$

and the slip ratio SLp is found from
the expression $SL_F = (V_F - V0) \ X \ 100/V0$,
the slip ratio SLR, SLF is calculated as a minus value, in which case the threshold value may be changed from the initial value to a higher value than the initial value.

In the embodiment not supporting the invention described above, the detection axis of the acceleration sensor 32 is set so as to become parallel to the up-and-down direction of the motorcycle V. The detection axis of the acceleration sensor 32 may be any direction if the direction does not match the back-and-forth direction or the side-to-side direction of the bar handle vehicle.

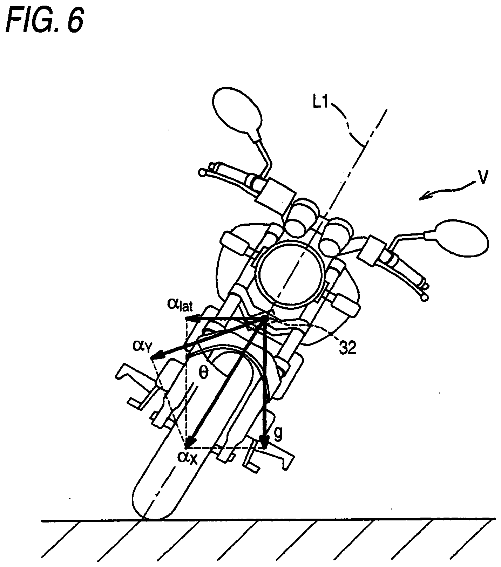

According to the claimed invention the acceleration sensor 32 is placed so that the detection axis is inclined by angle $\theta$ relative to the up-and-down axis LI of the motorcycle V, as shown in FIG. 6. In this case, the angle $\theta$ shifting the detection axis relative to the up-and-down axis LI may be stored in the storage 24 shown in FIG. 3 and the deriving unit 21 may calculate the acceleration $\alpha_x$ applied in the up-and-down direction of the motorcycle V based on acceleration $\alpha_y$ detected by the acceleration sensor 32 and the angle $\theta$. The acceleration $\alpha_x$ can be calculated according to the following expression (2):

$$\alpha_x = \alpha_y / \cos \theta \qquad (2)$$

After the acceleration $\alpha_x$ is calculated, the lateral acceleration $\alpha_{lat}$ can be calculated using expression (1) as in the embodiment described above.

[Second Embodiment]

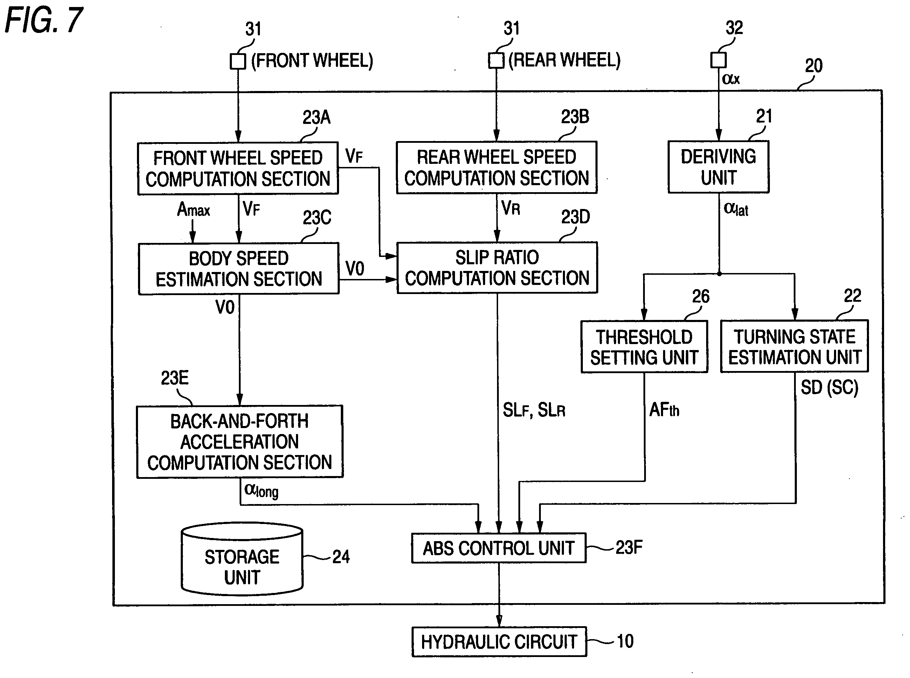

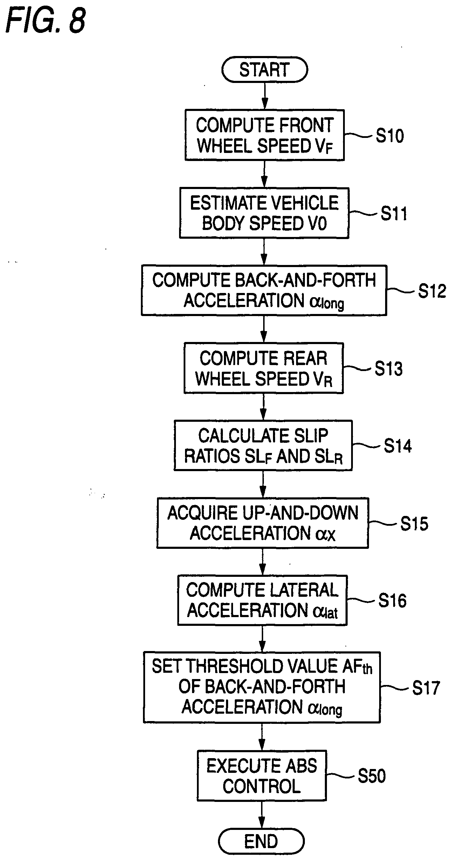

The second embodiment not supporting the invention relates to an improvement of the first embodiment. As shown in FIGs. 7 and 8, the second embodiment not supporting the invention, is a configuration in which a threshold value setting unit 26 is added to the configuration of the first embodiment.

In addition to the ABS control of the first embodiment, according to the second embodiment, the upper limit of the back-and-forth acceleration at the time of braking operation is acquired based on the lateral acceleration and the brake force is controlled so as not to exceed the upper limit, thereby the more safety ABS control can be performed.

Hereinafter, aspects of the second embodiment not supporting the invention which differs from the first embodiment will be explained.

The threshold setting unit 26 sets a threshold value AFth which is an upper limit of the back-and-forth acceleration at the time of braking operation based on the lateral acceleration $\alpha_{lat}$ derived by the deriving unit (deriving unit) 21. The back-and-forth acceleration and the lateral acceleration have following relation.

If the braking force is applied to the bar handle vehicle during turning motion, each wheel receives frictional force in the back-and-forth direction from the road surface, and also frictional force in the side-to-side direction because of turning motion. As for the frictional force acting between the wheel and the road surface which is the resultant force of the frictional force in the back-and-forth direction and the frictional force in the side-to-side direction, a tire friction circle is generally known as an index for setting the limit of the braking force during turning. The tire friction circle is an index meaning that the frictional force $F_{long}$ in the back-and-forth direction is taken on the vertical axis and the frictional force $F_{lat}$ in the side-to-side direction is taken on the horizontal axis and the resultant force thereof should fall within a circle with wheel's maximum frictional force F = $\mu$mg ($\mu$: Road surface friction coefficient, m: Vehicle mass containing a passenger, etc., (total weight), and g: Gravity acceleration) as a radius, and is given according to the following expression (1):

$$F^2 \geq \text{Flong}^2 + \text{Flat}^2 \qquad (1)$$

In expression (1), the frictional force $Fl_{ong}$ in the back-and-forth direction is determined by the braking force of a brake operation and thus can be found according to the following expression (2):

$$\text{Flong} = \text{PS}\mu' \, (r/R) \qquad (2)$$

(P: Hydraulic pressure of caliper, S: Caliper piston area, $\mu'$: Friction coefficient of caliper, r: Effective radius of brake disk, and R: Radius of wheel)

Letting the lateral acceleration during turning be $\alpha_{lat}$, the frictional force $Fl_{at}$ in the side-to-side direction supporting the centrifugal force of the lateral acceleration can be found according to the following expression (3): $F_{lat} = m\alpha_{lat}$

When expressions (2) and (3) are assigned to expression (1) and F = $\mu$mg is assigned to expression (1), the relation of the following expression (4) can be obtained:

$$(\mu mg)^2 \geq (\text{PS}\mu' \, (r/R))^2 + (m\alpha_{lat})^2 \ (4)$$

Letting the inclined attitude angle of the motorcycle be $\Phi$, $\alpha_{lat} = g * \tan\Phi$ and therefore expression (4) becomes the following expression (5):

$$(\mu mg)^2 \geq (\text{PS}\mu' \, (r/R))^2 + (mg*\tan\phi)^2 \ (5)$$

Expression (5) indicates that the back-and-forth and side-to-side braking force of the vehicle is within the tire friction circle and thus if the vehicle is braked at caliper hydraulic pressure (caliper pressure) P satisfying expression (5), the vehicle can be braked within the range of the tire's frictional force.

By the way, to pay attention to the caliper pressure and control the braking force, the limit value of the caliper pressure P depends on the vehicle mass m because expression (5) contains a term of the vehicle mass m. That is, if the vehicle mass m is large, the limit value of the caliper pressure P becomes large; if the vehicle mass m is small, the limit value of the caliper pressure P becomes small.

However, in the JP-A-07-002077, change in the vehicle mass m is not considered and the vehicle mass m is set as an assumed constant value. Thus, if the actual payload is small, there is a possibility that the braking force may be too large; if the actual payload is large, there is a possibility that the braking force may be suppressed.

Here, if $F_{long}$ is represented by back-and-forth acceleration $\alpha_{long}$ rather than by the caliper pressure P as in expression (2), $F_{long} = m \, \alpha_{long}$. If this is assigned to expression (1), the following expression (6) is obtained:

$$(\mu mg)^2 \geq (m \ \alpha_{long})^2 + (m \ \alpha_{lat})^2 \qquad (6)$$

Therefore, the following expression (7) is obtained:

$$(\mu g)^2 - \alpha_{lat}{}^2 \geq \alpha_{long}{}^2 \qquad (7)$$

Seeing the invention in view of expression (7), the threshold value setting unit 10 finds the value of the left side of expression (7) based on the lateral acceleration $\alpha_{lat}$ for setting the threshold value for defining the upper limit of the back-and-forth acceleration $\alpha_{long}$ and the braking force control unit controls the braking force of the vehicle based on the threshold value and the back-and-forth acceleration.

As is evident from expression (7), expression (7) does not contain a term of the vehicle mass m. Thus, according to the invention, the braking force of the vehicle can be controlled independently of the vehicle mass m.

Taking into account of the expression (7), the threshold setting unit 26 sets a threshold value $AF_{th}$ of back-and-forth acceleration generated by braking operation based on the lateral acceleration $\alpha_{lat}$ in the horizontal direction derived by the deriving unit (derivation unit) 21. The back-and-forth acceleration $\alpha_{long}$ and the lateral acceleration $\alpha_{lat}$ have the relation of expression (6) that the resultant force of the force applied in the back-and-forth direction and the force applied in the lateral direction generated by the back-and-forth acceleration and the lateral acceleration must be within the tire friction circle, and expression (7)

$$(\mu g)^2 - \alpha_{lat}{}^2 \geq \alpha_{long}{}^2 \quad (7)$$

is derived from expression (6) and the threshold value $AF_{th}$ of $\alpha_{long}$ is found from expression (7). For example, the threshold value $AF_{th}$ can be determined by the left side of expression (7), $(\mu g)^2 - \alpha_{lat}{}^2$. Specifically, the threshold value $AF_{th}$ is used as a threshold value of deceleration and thus is a negative value. That is, for example,

$$AF_{th} = -k\sqrt{((\mu g)^2 - \alpha_{lat}{}^2)} \quad (9)$$

where k is a safety factor having a value less than 1. As the friction coefficient $\mu$, the value stored in the storage 29 as a constant value may be used.

As shown in FIG.7, The ABS control unit 23F executes ABS control based on the slip ratio SLF, SLR computed by the slip ratio computation section 23D, the back-and-forth acceleration $\alpha_{long}$ calculated by the back-and-forth acceleration computation section 23E, and the threshold value $AF_{th}$. If the back-and-forth acceleration $\alpha_{long}$ is equal to or less than 0 and the slip ratio SLF, SLR is a predetermined threshold value or more or the back-and-forth acceleration $\alpha_{long}$ is smaller than the threshold value $AF_{th}$, the ABS control unit 23F executes pressure reduction control of the front caliper CF or the rear caliper CR to prevent lock of the wheel. That is, to start the pressure reduction control, the ABS control unit 23F closes the inlet valve 13 and opens the outlet valve 14, thereby discharging the brake 20 fluid in the caliper CF, CR and reducing the pressure of the caliper CF, CR.

The operation of the described brake controller 1 will be discussed with reference to FIG. 8. FIG. 8 is a flowchart to show the operation of the motorcycle brake controller according to the second embodiment not supporting the invention.

As shown in FIG. 8, first, the front wheel speed computation section 23A acquires the rotation speed of the front wheel from the wheel speed sensor 31 of the front wheel and computes front wheel speed $V_F$ (S10). The body speed estimation section 23C estimates vehicle body speed VO based on the front wheel speed $V_F$ (S11). Next, the back-and-forth acceleration computation section 23E differentiates the vehicle body speed VO and computes the back-and-forth acceleration $\alpha_{long}$ (S12).

The rear wheel speed computation section 23B acquires the rotation speed of the rear wheel from the wheel speed sensor 31 of the rear wheel and computes rear 10 wheel speed $V_R$(SI3). Next, the slip ratio computation section 23D calculates the slip ratios SLF and SLR of the front wheel and the rear wheel from the vehicle body speed V0, the front wheel speed $V_F$, and the rear wheel speed $V_R$(SI4).

On the other hand, the deriving unit 21 acquires up-and-down acceleration from the up-and-down acceleration sensor 32 (SI5) and computes the lateral acceleration $\alpha_{lat}$ in the horizontal direction derived according to expression (8) (SI6). The threshold setting unit 26 sets the threshold value $AF_{th}$ of the back-and-forth acceleration $\alpha_{long}$ according to expression (7) (for example, according to expression (9)) based on the lateral acceleration $\alpha_{lat}$ (S17).

The ABS control unit 23F executes ABS control based on the back-and-forth acceleration $\alpha_{long}$, the slip ratio SLF, SLR, and the threshold value $AF_{th}$ (S50). That is, if the slip ratio SLp, SLR is the predetermined threshold value or more or the back-and-forth acceleration $\alpha_{long}$ is smaller than the threshold value $AF_{th}$, the ABS 25 control unit 23F executes pressure reduction control of the front caliper CF or the rear caliper CR.

The described processing is executed repeatedly while the motorcycle V is running. That is, the threshold value $AF_{th}$ is updated appropriately in response to change in the lateral acceleration $\alpha_{lat}$.

By performing the processing, the brake controller 1 can set the appropriate threshold value $AF_{th}$ of the back-and-forth acceleration also during turning of the motorcycle V and can control braking of the motorcycle V so as not to exceed the 10 braking force corresponding to the threshold value $AF_{th}$ while seeing the threshold value $AF_{th}$. That is, the threshold value $AF_{th}$ is set based on expression (7) and thus can be determined without receiving the effect of the weight of the passenger or the weight of baggage and it is made possible to control braking the vehicle by an appropriate braking force independently of the factors.

In the embodiment, the threshold value $AF_{th}$ is updated appropriately in response to change in the lateral acceleration $\alpha_{lat}$, so that the appropriate threshold value $AF_{th}$ can be set in response to the turning state of the motorcycle V and good braking force control can be executed.

[Third embodiment]

Next, a third embodiment not supporting the invention will be discussed. The description is mainly focused on the difference between the third embodiment and the second embodiment and parts identical with those of the second embodiment are denoted by 25 the same reference numerals in the third embodiment and will not be discussed again.

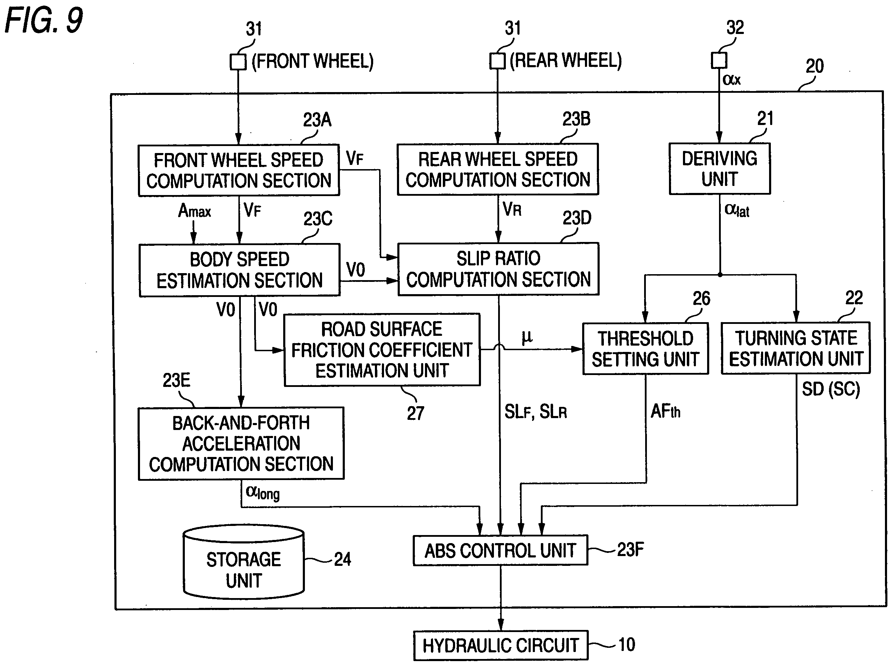

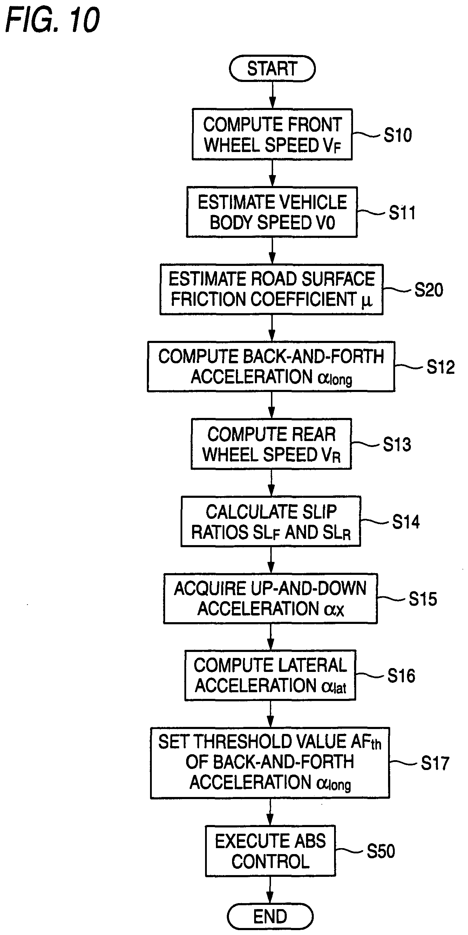

FIG. 9 is a block diagram of a control unit according to the third embodiment of the invention and FIG. 10 is a flowchart to show the operation of a brake controller according to the third embodiment of the invention.
As shown in FIG. 9, the brake controller of the third embodiment differs from the brake controller 1 of the second embodiment in that it further includes road surface friction coefficient estimation unit 27 which estimates a road surface friction coefficient and threshold setting unit 26 sets a threshold value $AF_{th}$ based on a road surface friction coefficient $\mu$ estimated by the road surface friction coefficient estimation unit 27 and lateral acceleration $\alpha_{lat}$ acquired by the deriving unit 21.
The road surface friction coefficient estimation unit 27 estimates the road surface friction coefficient $\mu$ according to a known method based on vehicle body speed VO estimated by a body speed estimation section 23 C. Deceleration during 15 deceleration at a point in time when a motorcycle V is not turning, namely, back-and-forth acceleration $\alpha_{long}$ can be estimated as the current road surface friction coefficient $\mu$ at anytime by way of example. The estimated road surface friction coefficient $\mu$ is output to the threshold setting unit 26.
The threshold setting unit 26 determines the threshold value $AF_{th}$ according expression (7) as in the second embodiment based on the road surface friction coefficient $\mu$ estimated by the road surface friction coefficient estimation unit 27 and the lateral acceleration $\alpha_{lat}$ in the horizontal direction computed by the deriving unit 21.
In the flowchart of FIG. 10, the operation of the brake controller of the third embodiment differs from that of the second embodiment only in that step S20 of estimating the road surface friction coefficient $\mu$ is added after step S11. The processing containing step S20 is performed, whereby $AF_{th}$ for defining the upper limit 5 of the back-and-forth acceleration is set based on the road surface friction coefficient $\mu$ estimated and updated at any time, so that it is made possible to control braking in response to the situation of the road surface by the brake controller of the embodiment.
In the embodiments described above, the back-and-forth acceleration $\alpha_{long}$ is estimated based on the vehicle body speed VO found from the front wheel speed $V_F$, but a separate back-and-forth acceleration sensor may be provided for acquiring the back-and-forth acceleration $\alpha_{long}$.
While the invention has been described in connection with the exemplary embodiments, it will be obvious to those skilled in the art that various changes and modifications may be made therein without departing from the present invention.

**Claims**

1. An anti-lock brake control method for a bar handle vehicle (V), the method comprising:

   detecting an acceleration (S15) of the bar handle vehicle (V) by an acceleration sensor (32) of which detection axis does not direct to a back-and-forth direction and left-and-right direction of the bar handle vehicle (V), wherein said detection axis is shifted by a first angle relative to an up-and-down axis (L1) and wherein an acceleration applied in an up-and-down direction is calculated based on an acceleration (S15) detected by said acceleration sensor (32) and said first angle; and
   deriving a lateral acceleration ($\alpha_{lat}$), which is horizontal to a ground, based on the detected acceleration (S15) ;
   estimating a turning state of the bar handle vehicle (V) based on the derived lateral acceleration ($\alpha_{lat}$); and
   changing a threshold value (AFth) for starting antilock control based on the turning state and to control braking force applied to the bar handle vehicle (V) based on the estimated turning state,
   acquiring a back-and-forth acceleration ($\alpha_{long}$) occurring in the back-and-forth direction of the bar handle vehicle (V);
   **characterised in that** the method further comprises:

   setting the threshold value (AFth)representing an upper limit of the back-and-forth acceleration ($\alpha_{long}$) generated by a braking operation based on the derived lateral acceleration ($\alpha_{lat}$); and,
   controlling the braking force of the bar handle vehicle (V) using the back-and-forth acceleration ($\alpha_{long}$) and the threshold value(AFth) as not to exceed the upper limit of the back-and-forth acceleration ($\alpha_{long}$), and
   wherein the threshold value (AFth) is set based on the expression: $(\mu g)^2 - \alpha_{lat}^2 \geq \alpha_{long}2$ wherein ($\mu$) is a road surface friction coefficient, (g) is gravity acceleration, ($\alpha_{lat}$) is the derived lateral acceleration during turning, and ($\alpha_{long}$) is the back-and-forth acceleration.

2. An anti-lock brake controller (20) for a bar handle vehicle (V) comprising:

an acceleration sensor (32) for detecting acceleration of the bar handle vehicle (V) of which detection axis does not direct to a back-and-forth and left-and-right directions of the bar handle vehicle (V), wherein said detection axis is shifted by a first angle relative to an up-and-down axis (L1) and wherein an acceleration applied in an up-and-down direction is calculated based on an acceleration (S15) detected by said acceleration sensor (32) and said first angle;

a lateral acceleration deriving unit (21) for deriving a lateral acceleration ($\alpha_{lat}$), which is horizontal to a ground, based on the detected acceleration (S15);

a turning state estimation unit (22) for estimating a turning state of the bar handle vehicle (V) based on the derived lateral acceleration ($\alpha_{lat}$); and

a braking force control unit (23F) adapted to change a threshold value (AFth) for starting antilock control based on the turning state and to control braking force applied to the bar handle vehicle (V) based on the estimated turning state,

a back-and-forth acceleration acquisition unit (23E) for acquiring a back-and-forth acceleration ($\alpha_{long}$) occurring in the back-and-forth direction of the bar handle vehicle (V);

**characterised in that** the controller (20) further comprises:

a threshold value setting unit (26) for setting the threshold value (AFth) representing an upper limit of the back-and-forth acceleration ($\alpha_{long}$) generated by a braking operation based on the derived lateral acceleration ($\alpha_{lat}$); and

a braking force control unit (23F) for controlling the braking force of the bar handle vehicle (V) using the back-and-forth acceleration ($\alpha_{long}$) and the threshold value (AFth) as not to exceed the upper limit of the back-and-forth acceleration ($\alpha_{long}$) and wherein the threshold value setting unit (26) is adapted to set the threshold value (AFth) based on the expression: $(\mu g)^2 - \alpha_{lat}^2 \geq \alpha_{long}^2$

wherein ($\mu$) is a road surface friction coefficient, (g) is gravity acceleration, ($\alpha_{lat}$) is the derived lateral acceleration during turning, and ($\alpha_{long}$) is the back-and-forth acceleration.

3. The controller (20) as claimed in claim 2 wherein

the turning state estimation unit (22) is adapted to estimate that the bar handle vehicle (V) is in a slip turning state in which a wheel easily slips occurs if the lateral acceleration ($\alpha_{lat}$) is a predetermined value or more, and the braking force control unit (23F) is adapted to change the threshold value (AFth) for starting antilock control of a wheel brake in a direction in which the antilock control is easily started when the turning state estimation unit (22) estimates the slip turning state.

4. The controller (20) as set forth in claim 2 further comprising:

a road surface friction coefficient estimation unit for estimating a road surface friction coefficient ($\mu$), wherein the threshold setting unit (26) is adapted to set the threshold value (AFth) based on the estimated road surface friction coefficient ($\mu$) and the acquired lateral acceleration ($\alpha_{lat}$).

5. The controller (20) as set forth in claim 4, wherein the threshold setting unit (26) is adapted to update and set the threshold value (AFth) repeatedly.

6. The controller (20) as set forth in Claims 2 to 5, wherein the back-and-forth acceleration acquisition unit (23E) is adapted to calculate the back-and-forth acceleration ($\alpha_{long}$) based on wheel speed obtained from a wheel speed sensor provided in each wheel of the bar handle vehicle (V).

7. A bar handle vehicle (V) including an anti-lock brake controller (20) according to any of claims 2 to 6.


**Patentansprüche**

1. Antiblockier-Bremssteuerungsverfahren für ein Fahrzeug mit Lenker (V), wobei das Verfahren Folgendes umfasst:

Detektieren einer Beschleunigung (S15) des Fahrzeugs mit Lenker (V) durch einen Beschleunigungssensor (32), dessen Detektionssachse nicht zu einer Rückwärts- und Vorwärtsrichtung und Links- und Rechtsrichtung des Fahrzeugs mit Lenker (V) gerichtet ist, wobei

die Detektionsachse um einen ersten Winkel zu einer Aufwärts- und Abwärtsachse (L1) verlagert ist, und wobei eine Beschleunigung, die in eine Aufwärts- und Abwärtsrichtung angelegt wird, basierend auf einer Beschleunigung (S15), die von dem Beschleunigungssensor (32) detektiert wird, und dem ersten Winkel berechnet wird; und

Ableiten einer Querbeschleunigung ($\alpha_{lat}$), die horizontal zu einem Boden ist, basierend auf der detektierten Beschleunigung (S15);

Schätzen eines Wendezustands des Fahrzeugs mit Lenker (V) basierend auf der abgeleiteten Querbeschleunigung ($\alpha_{lat}$); und

Ändern eines Schwellenwerts (AFth) zum Starten einer Antiblockier-Steuerung basierend auf dem Wendezustand und zum Steuern der Bremskraft, die an das Fahrzeug mit Lenker (V) angelegt wird, basierend auf dem geschätzten Wendezustand,

Erfassen einer Rückwärts- und Vorwärtsbeschleunigung ($\alpha_{long}$), die in die Rückwärts- und Vorwärtsrichtung des Fahrzeugs mit Lenker (V) auftritt;

**dadurch gekennzeichnet, dass** das Verfahren weiter Folgendes umfasst:

Einstellen des Schwellenwerts (AFth), der ein oberes Limit der Rückwärts- und Vorwärtsbeschleunigung ($\alpha_{long}$) darstellt, die von einem Bremsvorgang erzeugt wird, basierend auf der abgeleiteten Querbeschleunigung ($\alpha_{lat}$); und

Steuern der Bremskraft des Fahrzeugs mit Lenker (V) unter Verwenden der Rückwärts- und Vorwärtsbeschleunigung ($\alpha_{long}$) und des Schwellenwerts (AFth), um das obere Limit der Rückwärts- und Vorwärtsbeschleunigung ($\alpha_{long}$) nicht zu überschreiten, und wobei der Schwellenwert (AFth) basierend auf dem Ausdruck: $(\mu g)^2 - \alpha_{lat}^2 \geq \alpha_{long}^2$ eingestellt wird, wobei ($\mu$) ein Straßenoberflächenreibungskoeffizient ist, (g) Schwerkraftbeschleunigung ist, ($\alpha_{lat}$) die abgeleitete Querbeschleunigung während des Wendens ist, und ($\alpha_{long}$) die Rückwärts- und Vorwärtsbeschleunigung ist.

2. Antiblockier-Bremssteuerung (20) für ein Fahrzeug mit Lenker (V), die Folgendes umfasst:

einen Beschleunigungssensor (32) zum Detektieren von Beschleunigung des Fahrzeugs mit Lenker (V), dessen Detektionsachse nicht zu einer Rückwärts- und Vorwärts- und Links- und Rechtsrichtung des Fahrzeugs mit Lenker (V) gerichtet ist,

wobei die Detektionsachse um einen ersten Winkel zu einer Aufwärts- und Abwärtsachse (L1) verlagert ist, und wobei eine Beschleunigung, die in eine Aufwärts- und Abwärtsrichtung angelegt wird, basierend auf einer Beschleunigung (S15), die von dem Beschleunigungssensor (32) erfasst wird, und dem ersten Winkel berechnet wird;

eine Ableitungseinheit (21) von Querbeschleunigung zum Ableiten einer Querbeschleunigung ($\alpha_{lat}$), die zu einem Boden horizontal ist, basierend auf der detektierten Beschleunigung (S15);

eine Wendezustandsschätzungseinheit (22) zum Schätzen eines Wendezustands des Fahrzeugs mit Lenker (V) basierend auf der abgeleiteten Querbeschleunigung ($\alpha_{lat}$); und

eine Bremskraft-Steuereinheit (23F), die angepasst ist, um einen Schwellenwert (AFth) für das Starten von Antiblockier-Steuerung basierend auf dem Wendezustand zu ändern und die Bremskraft zu steuern, die basierend auf dem geschätzten Wendezustand an das Fahrzeug mit Lenker (V) angelegt wird,

eine Erfassungseinheit (23E) der Rückwärts- und Vorwärtsbeschleunigung zum Erfassen einer Rückwärts- und Vorwärtsbeschleunigung ($\alpha_{long}$), die in die Rückwärts- und Vorwärtsrichtung des Fahrzeugs mit Lenker (V) auftritt;

**dadurch gekennzeichnet, dass** die Steuerung (20) weiter Folgendes umfasst:

eine Schwellenwerteinstelleinheit (26) zum Einstellen des Schwellenwerts (AFth), der ein oberes Limit der Rückwärts- und Vorwärtsbeschleunigung ($\alpha_{long}$) darstellt, die von einem Bremsvorgang erzeugt wird, basierend auf der abgeleiteten Querbeschleunigung ($\alpha_{lat}$); und

eine Bremskraft-Steuereinheit (23F) zum Steuern der Bremskraft des Fahrzeugs mit Lenker (V) unter Verwenden der Rückwärts- und Vorwärtsbeschleunigung ($\alpha_{long}$) und des Schwellenwerts (AFth), um das obere Limit der Rückwärts- und Vorwärtsbeschleunigung ($\alpha_{long}$) nicht zu überschreiten, und wobei die Schwellenwerteinstelleinheit (26) angepasst ist, um den Schwellenwert (AFth) basierend auf dem Ausdruck: $(\mu g)^2 - \alpha_{lat}^2 \geq \alpha_{long}^2$ einzustellen, wobei ($\mu$) ein Straßenoberflächenreibungskoeffizient ist, (g) Schwerkraftbeschleunigung ist, ($\alpha_{lat}$) die abgeleitete Querbeschleunigung während des Wendens ist, und ($\alpha_{long}$) die Rückwärts- und Vorwärtsbeschleunigung ist.

**3.** Steuerung (20) nach Anspruch 2, wobei
die Wendezustandsschätzungseinheit (22) angepasst ist, um zu schätzen, dass sich das Fahrzeug mit Lenker (V) in einem Schlupfwendezustand befindet, in dem ein Radschlupf ohne Weiteres auftritt, falls die Querbeschleunigung ($\alpha_{lat}$) ein vorbestimmter Wert ist oder darüber liegt, und
die Bremskraft-Steuereinheit (23F) angepasst ist, um den Schwellenwert (AFth) zum Starten von Antiblockier-Steuerung einer Radbremse in eine Richtung zu ändern, in die die Antiblockier-Steuerung ohne Weiteres gestartet wird, wenn die Wendezustandsschätzungseinheit (22) den Schlupfwendezustand schätzt.

**4.** Steuerung (20) nach Anspruch 2, die weiter Folgendes umfasst:

eine Schätzungseinheit des Straßenoberflächenreibungskoeffizienten für das Schätzen eines Straßenoberflächenreibungskoeffizienten ($\mu$),
wobei die Schwellenwerteinstelleinheit (26) angepasst ist, um den Schwellenwert (AFth) basierend auf dem geschätzten Straßenoberflächenreibungskoeffizienten ($\mu$) und der erfassten Querbeschleunigung ($\alpha_{lat}$) einzustellen.

**5.** Steuerung (20) nach Anspruch 4, wobei die Schwellenwerteinstelleinheit (26) angepasst ist, um den Schwellenwert (AFth) wiederholt zu aktualisieren und einzustellen.

**6.** Steuerung (20) nach den Ansprüchen 2 bis 5,
wobei die Erfassungseinheit der Rückwärts- und Vorwärtsbeschleunigung (23E) angepasst ist, um die Rückwärts- und Vorwärtsbeschleunigung ($\alpha_{long}$) basierend auf der Raddrehzahl zu berechnen, die von einem Raddrehzahlsensor erhalten wird, der in jedem Rad des Fahrzeugs mit Lenker (V) vorgesehen ist.

**7.** Fahrzeug mit Lenker (V), das eine Antiblockier-Bremssteuerung (20) nach einem der Ansprüche 2 bis 6 beinhaltet.

**Revendications**

**1.** Procédé de commande de frein antiblocage pour un véhicule à guidon (V), le procédé comprenant :

la détection d'une accélération (S15) du véhicule à guidon (V) par un capteur d'accélération (32) dont l'axe de détection ne se dirige pas dans une direction avant et arrière et direction gauche et droite du véhicule à guidon (V), dans lequel
ledit axe de détection est déplacé d'un premier angle par rapport à un axe de haut en bas (L1) et dans lequel une accélération appliquée dans une direction de haut en bas est calculée sur la base d'une accélération (S15) détectée par ledit capteur d'accélération (32) et ledit premier angle ; et
la dérivation d'une accélération latérale ($\alpha_{lat}$) qui est horizontale par rapport à un sol, sur la base de l'accélération détectée (S15) ;
l'estimation d'un état de virage du véhicule à guidon (V) sur la base de l'accélération latérale dérivée ($\alpha_{lat}$) ; et
le changement d'une valeur seuil (AFth) pour le démarrage de la commande antiblocage sur la base de l'état de virage et pour la commande de force de freinage appliquée au véhicule à guidon (V) sur la base de l'état de virage estimé,
l'acquisition d'une accélération avant et arrière ($\alpha_{long}$) apparaissant dans la direction avant et arrière du véhicule à guidon (V) ;
**caractérisé en ce que** le procédé comprend en outre :

le réglage de la valeur seuil (AFth) représentant une limite supérieure de l'accélération avant et arrière ($\alpha_{long}$) générée par une opération de freinage sur la base de l'accélération latérale dérivée ($\alpha_{lat}$) ; et,
la commande de la force de freinage du véhicule à guidon (V) en utilisant l'accélération avant et arrière ($\alpha_{long}$) et la valeur seuil (AFth) de sorte à ne pas excéder la limite supérieure de l'accélération avant et arrière ($\alpha_{long}$), et dans lequel la valeur seuil (AFth) est réglée sur la base de l'expression : $(\mu g)^2 - \alpha_{lat}^2 \geq \alpha_{long}^2$, dans lequel ($\mu$) est un coefficient de friction de surface de route, (g) est l'accélération de gravité, ($\alpha_{lat}$) est l'accélération latérale dérivée pendant le virage, et ($\alpha_{long}$) est l'accélération avant et arrière.

**2.** Dispositif de commande de frein antiblocage (20) pour un véhicule à guidon (V) comprenant :

un capteur d'accélération (32) pour la détection de l'accélération du véhicule à guidon (V) dont l'axe de détection ne se dirige pas vers une direction avant et arrière et gauche et droite du véhicule à guidon (V),

dans lequel ledit axe de détection est déplacé d'un premier angle par rapport à un axe de haut en bas (L1) et dans lequel une accélération appliquée dans une direction de haut en bas est calculée sur la base d'une accélération (S15) détectée par ledit capteur d'accélération (32) et ledit premier angle ;

une unité de dérivation d'accélération latérale (21) pour la dérivation d'une accélération latérale ($\alpha_{lat}$) qui est horizontale par rapport à un sol, sur la base de l'accélération détectée (S15) ;

une unité d'estimation d'état de virage (22) pour l'estimation d'un état de virage du véhicule à guidon (V) sur la base de l'accélération latérale dérivée ($\alpha_{lat}$) ; et

une unité de commande de force de freinage (23F) adaptée pour changer une valeur seuil (AFth) pour le démarrage de la commande antiblocage sur la base de l'état de virage et pour commander la force de freinage appliquée au véhicule à guidon (V) sur la base de l'état de virage estimé,

une unité d'acquisition d'accélération avant et arrière (23E) pour l'acquisition d'une accélération avant et arrière ($\alpha_{long}$) apparaissant dans la direction avant et arrière du véhicule à guidon (V) ;

**caractérisé en ce que** le dispositif de commande (20) comprend en outre :

une unité de réglage de valeur seuil (26) pour le réglage de la valeur seuil (AFth) représentant une limite supérieure de l'accélération avant et arrière ($\alpha_{long}$) générée par une opération de freinage sur la base de l'accélération latérale dérivée ($\alpha_{lat}$) ; et

une unité de commande de force de freinage (23F) pour la commande de la force de freinage du véhicule à guidon (V) en utilisant l'accélération avant et arrière ($\alpha_{long}$) et la valeur seuil (AFth) de sorte à ne pas excéder la limite supérieure de l'accélération avant et arrière ($\alpha_{long}$) et dans lequel l'unité de réglage de valeur seuil (26) est adaptée pour régler la valeur seuil (AFth) sur la base de l'expression : $(\mu g)^2 - \alpha_{lat}^2 \geq \alpha_{long}^2$

dans lequel ($\mu$) est un coefficient de friction de surface de route, (g) est l'accélération de gravité, ($\alpha_{lat}$) est l'accélération latérale dérivée pendant le virage, et ($\alpha_{long}$) est l'accélération avant et arrière.

3. Dispositif de commande (20) selon la revendication 2, dans lequel

l'unité d'estimation d'état de virage (22) est adaptée pour estimer que le véhicule à guidon (V) est dans un état de virage de patinage dans lequel une roue patine facilement si l'accélération latérale ($\alpha_{lat}$) est une valeur prédéterminée ou supérieure, et

l'unité de commande de force de freinage (23F) est adaptée pour changer la valeur seuil (AFth) pour le démarrage de la commande antiblocage d'un frein de roue dans une direction dans laquelle la commande antiblocage est facilement démarrée lorsque l'unité d'estimation d'état de virage (22) estime l'état de virage de patinage.

4. Dispositif de commande (20) selon la revendication 2, comprenant en outre :

une unité d'estimation de coefficient de friction de surface de route pour l'estimation d'un coefficient de friction de surface de route ($\mu$),

dans lequel l'unité de réglage seuil (26) est adaptée pour régler la valeur seuil (AFth) sur la base du coefficient de friction de surface de route estimé ($\mu$) et l'accélération latérale acquise ($\alpha_{lat}$).

5. Dispositif de commande (20) selon la revendication 4, dans lequel l'unité de réglage seuil (26) est adaptée pour mettre à jour et régler la valeur seuil (AFth) de manière répétée.

6. Dispositif de commande (20) selon les revendications 2 à 5, dans lequel l'unité d'acquisition d'accélération avant et arrière (23E) est adaptée pour calculer l'accélération avant et arrière ($\alpha_{long}$) sur la base de la vitesse de roue obtenue à partir d'un capteur de vitesse de roue prévu dans chaque roue du véhicule à guidon (V).

7. Véhicule à guidon (V) incluant un dispositif de commande de frein antiblocage (20) selon l'une quelconque des revendications 2 à 6.

# FIG. 1

FIG.2

**FIG. 3**

*FIG. 4*

```
            ( START )
                |
                v
        +------------------+
        |    ACQUIRE       |   S1
        |  ACCELERATION    |
        +------------------+
                |
                v
        +------------------+
        | CALCULATE LATERAL|   S2
        |  ACCELERATION    |
        +------------------+
                |
                v
              /  \           S3
        <  DRIVING     >--------- NO ----------+
        < STRAIGHT AHEAD? >                    |
              \  /                             |
               | YES   S4                      |           S5
               v                               v
   +---------------------------+    +---------------------------+
   | THRESHOLD VALUE <- α1     |    | THRESHOLD VALUE <- α2     |
   +---------------------------+    +---------------------------+
               |                               |
               +<------------------------------+
               v
              /  \              S6
        < SLIP RATIO >= THRESHOLD >---- YES -----+
        <      VALUE?      >                     |
              \  /                               |
               | NO    S7                        |           S8
               v                                 v
   +---------------------------+      +---------------------------+
   | PERFORM PRESSURE          |      | PERFORM PRESSURE          |
   | INCREASE CONTROL          |      | REDUCTION CONTROL         |
   +---------------------------+      +---------------------------+
               |                                 |
               +<--------------------------------+
               v
            (  END  )
```

# FIG. 5

FIG. 6

## FIG. 7

31
(FRONT WHEEL)

31
(REAR WHEEL)

32
$\alpha x$

20

23A
FRONT WHEEL SPEED COMPUTATION SECTION

$V_F$

23B
REAR WHEEL SPEED COMPUTATION SECTION

21
DERIVING UNIT

$\alpha_{lat}$

$A_{max}$  $V_F$

23C
BODY SPEED ESTIMATION SECTION

$V_0$

$V_R$

23D
SLIP RATIO COMPUTATION SECTION

$V_0$

26
THRESHOLD SETTING UNIT

22
TURNING STATE ESTIMATION UNIT

$V_0$

SD (SC)

23E
BACK-AND-FORTH ACCELERATION COMPUTATION SECTION

$SL_F, SL_R$

$AF_{th}$

$\alpha_{long}$

STORAGE UNIT ⌐24

ABS CONTROL UNIT ⌐23F

HYDRAULIC CIRCUIT ⌐10

EP 2 106 980 B1

## FIG. 8

```
            ( START )
               │
               ▼
    ┌─────────────────────┐
    │  COMPUTE FRONT      │
    │  WHEEL SPEED V_F    │──── S10
    └─────────────────────┘
               │
               ▼
    ┌─────────────────────┐
    │  ESTIMATE VEHICLE   │──── S11
    │  BODY SPEED V0      │
    └─────────────────────┘
               │
               ▼
    ┌──────────────────────────┐
    │  COMPUTE BACK-AND-FORTH   │──── S12
    │  ACCELERATION α_long      │
    └──────────────────────────┘
               │
               ▼
    ┌─────────────────────┐
    │  COMPUTE REAR       │──── S13
    │  WHEEL SPEED V_R    │
    └─────────────────────┘
               │
               ▼
    ┌─────────────────────┐
    │  CALCULATE SLIP     │──── S14
    │  RATIOS SL_F AND SL_R│
    └─────────────────────┘
               │
               ▼
    ┌─────────────────────┐
    │  ACQUIRE UP-AND-DOWN│──── S15
    │  ACCELERATION α_X   │
    └─────────────────────┘
               │
               ▼
    ┌─────────────────────┐
    │  COMPUTE LATERAL    │──── S16
    │  ACCELERATION α_lat │
    └─────────────────────┘
               │
               ▼
    ┌──────────────────────────┐
    │  SET THRESHOLD VALUE AF_th│
    │  OF BACK-AND-FORTH        │──── S17
    │  ACCELERATION α_long      │
    └──────────────────────────┘
               │
               ▼
    ┌─────────────────────┐
    │  EXECUTE ABS        │──── S50
    │  CONTROL            │
    └─────────────────────┘
               │
               ▼
            (  END  )
```

FIG. 9

## FIG. 10

```
                    ┌─────────┐
                    │  START  │
                    └─────────┘
                         │
                         ▼
              ┌──────────────────────┐
              │  COMPUTE FRONT       │── S10
              │  WHEEL SPEED VF      │
              └──────────────────────┘
                         │
                         ▼
              ┌──────────────────────┐
              │  ESTIMATE VEHICLE    │── S11
              │  BODY SPEED V0       │
              └──────────────────────┘
                         │
                         ▼
              ┌──────────────────────┐
              │  ESTIMATE ROAD SURFACE│── S20
              │  FRICTION COEFFICIENT μ│
              └──────────────────────┘
                         │
                         ▼
              ┌──────────────────────┐
              │  COMPUTE BACK-AND-FORTH│── S12
              │  ACCELERATION αlong   │
              └──────────────────────┘
                         │
                         ▼
              ┌──────────────────────┐
              │  COMPUTE REAR        │── S13
              │  WHEEL SPEED VR      │
              └──────────────────────┘
                         │
                         ▼
              ┌──────────────────────┐
              │  CALCULATE SLIP      │── S14
              │  RATIOS SLF AND SLR  │
              └──────────────────────┘
                         │
                         ▼
              ┌──────────────────────┐
              │  ACQUIRE UP-AND-DOWN │── S15
              │  ACCELERATION αx     │
              └──────────────────────┘
                         │
                         ▼
              ┌──────────────────────┐
              │  COMPUTE LATERAL     │── S16
              │  ACCELERATION αlat   │
              └──────────────────────┘
                         │
                         ▼
              ┌──────────────────────┐
              │  SET THRESHOLD VALUE AFth│── S17
              │  OF BACK-AND-FORTH   │
              │  ACCELERATION αlong  │
              └──────────────────────┘
                         │
                         ▼
              ┌──────────────────────┐
              │  EXECUTE ABS         │── S50
              │  CONTROL             │
              └──────────────────────┘
                         │
                         ▼
                    ┌─────────┐
                    │   END   │
                    └─────────┘
```

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004051091 A
- JP 7002077 A
- DE 102004021590
- WO 2006077211 A
- JP 200405109120 A